# EUROPÄISCHE PATENTSCHRIFT

(11) **EP 0 434 973 B1**
(45) Veröffentlichungstag und Bekanntmachung des Hinweises auf die Patenterteilung: **15.12.1993**
(21) Anmeldenummer: 90122152.3
(22) Anmeldetag: 20.11.1990
(51) Int. Cl.: G01D 5/36

(54) **Lichtelektrische Positionsmesseinrichtung**
Opto-electronic position measuring device
Dispositif opto-électronique pour la mesure de positions

(30) Priorität: 30.11.1989 DE 3939504
(43) Veröffentlichungstag der Anmeldung: 03.07.1991
(73) Patentinhaber: Dr. Johannes Heidenhain GmbH, D-83292 Traunreut (DE)
(72) Erfinder: Dangschat, Holmer, Dipl.-Ing., W-8225 Traunreut (DE)

(56) Entgegenhaltungen:
- EP-A- 0 160 811
- EP-A- 0 194 611
- EP-A- 0 237 470
- DE-A- 1 060 609
- US-A- 4 647 769

## Beschreibung

Die Erfindung betrifft eine lichtelektrische Positionsmeßeinrichtung gemäß dem Oberbegriff des Anspruches 1.

Derartige Positionsmeßeinrichtungen werden insbesondere bei Bearbeitungsmaschinen zur Messung der Relativlage eines Werkzeugs bezüglich eines zu bearbeitenden Werkstücks eingesetzt.

Bei einer solchen Positionsmeßeinrichtung können die an der wenigstens einen Referenzmarke erzeugten Referenzsignale auf verschiedene Weise verwertet werden, beispielsweise zum Reproduzieren einer Nullposition im Zähler, zum Anfahren einer bestimmten Position zu Beginn einer Messung oder zur Kontrolle von Störimpulsen sowie zur Beaufschlagung einer nachgeschalteten Steuereinrichtung.

Aus der DE-PS 35 09 102 (EP-A-0 194 611) ist eine lichtelektrische Positionsmeßeinrichtung bekannt, bei der ein Teilungsträger eine Teilung und wenigstens zwei voneinander beabstandete Referenzmarken aufweist. Eine Abtasteinheit tastet die beiden voneinander beabstandeten Referenzmarken mittels zweier voneinander beabstandeter Referenzabtastteilungen ab, denen jeweils ein Photoelement zugeordnet ist. Der gegenseitige Abstand der beiden Referenzmarken unterscheidet sich vom gegenseitigen Abstand der beiden Referenzabtastteilungen derart, daß sich die durch Abtastung der beiden Referenzmarken von den Photoelementen erzeugten zwei Referenzsignale überlappen. In einer Auswerteeinrichtung wird aus den beiden Referenzsignalen ein schmaler resultierender Referenzimpuls gebildet, dessen Breite der Überlappungsbreite der beiden Referenzsignale entspricht.

Der DE-PS 34 16 864 (EP-A-0 160 811) entnimmt man eine lichtelektrische Positionsmeßeinrichtung der gattungsgemäßen Art. Die Referenzmarke ist als erstes Phasengitter mit einer ersten Gitterkonstanten und das Umfeld der Referenzmarke in Meßrichtung als zweites Phasengitter mit einer zweiten Gitterkonstanten ausgebildet. Sei der Meßbewegung tastet eine Referenzabtasteilung die Referenzmarke ab, wobei die vom ersten Phasengitter der Referenzmarke ausgehenden Beugungsstrahlen erster Ordnung zwei symmetrisch zur Teilungsachse der Referenzabtastteilung angeordnete innere Referenzphotoelemente zur Erzeugung eines Referenzsignals beaufschlagen. Bei der Abtastung des Umfeldes durch die Referenzabtastteilung beaufschlagen die vom zweiten Phasengitter ausgehenden Beugungsstrahlen erster Ordnung zwei symmetrisch zur Teilungsachse angeordnete äußere Photoelemente zur Erzeugung eines Referenzgegentaktsignals.

Der Erfindung liegt die Aufgabe zugrunde, bei einer lichtelektrischen Positionsmeßeinrichtung der genannten Gattung mit einfachen Mitteln einen sicher auswertbaren Referenzimpuls zu erzeugen.

Diese Aufgabe wird erfindungsgemäß durch die kennzeichnenden Merkmale des Anspruches 1 gelöst.

Die mit der Erfindung erzielten Vorteile bestehen insbesondere darin, daß durch das Vorsehen der Blende in der optischen Achse des Referenzabtaststrahlenganges und durch das Schrägstellen der Referenzabtastteilung bei der Abtastung einer Referenzmarke zwei sich überlappende Referenzsignale zur Gewinnung eines schmalen resultierenden Referenzimpulses gewonnen werden können, ohne daß die Anzahl der Referenzphotoelemente erhöht werden muß, so daß sich eine besonders einfach aufgebaute, sicher arbeitende Positionsmeßeinrichtung ergibt.

Vorteilhafte Ausbildungen der Erfindung entnimmt man den abhängigen Ansprüchen.

Ein Ausführungsbeispiel der Erfindung wird anhand der Zeichnung näher erläutert.

Es zeigen
- Figur 1: eine lichtelektrische Positionsmeßeinrichtung in einem schematischen Querschnitt;
- Figur 2: eine Draufsicht auf zwei Abtastplatten;
- Figur 3: eine Draufsicht auf einen Teilungsträger;
- Figur 4: eine Seitenansicht einer Blende;
- Figur 5: zwei Referenzsignale;
- Figur 6: zwei Referenzimpulse;
- Figur 7: einen resultierenden Referenzimpuls.

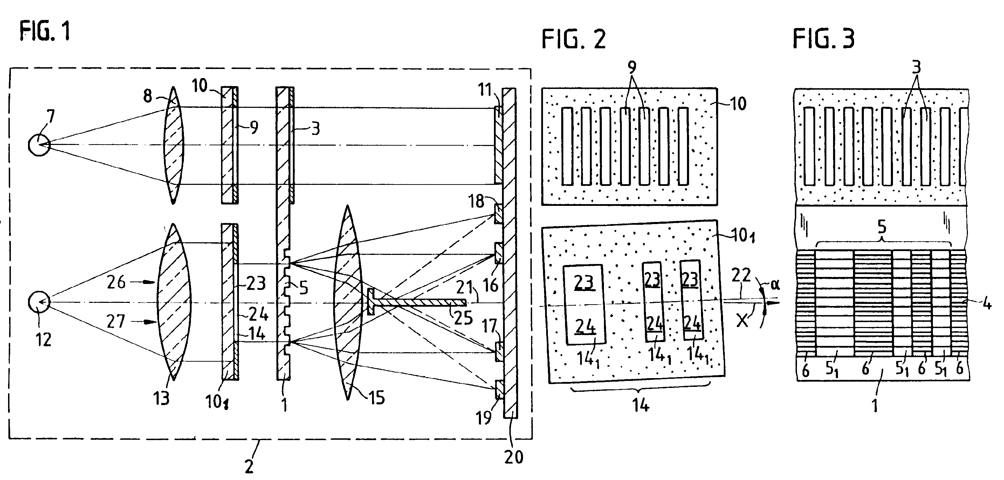

In Figur 1 ist schematisch in einem Querschnitt eine lichtelektrische Positionsmeßeinrichtung gezeigt, bei der ein transparenter Teilungsträger 1 an einem nicht dargestellten ersten Objekt befestigt ist. Der Teilungsträger 1 wird von einer Abtasteinheit 2 abgetastet, die an einem nicht gezeigten zweiten Objekt befestigt ist. Die beiden Objekte, deren gegenseitige Relativlage gemessen werden soll, können beispielsweise durch einen Schlitten und durch das Bett einer nicht dargestellten Bearbeitungsmaschine gebildet sein. Die Meßrichtung X verläuft senkrecht zur Zeichenebene.

Figur 3 zeigt in einer Draufsicht den transparenten Teilungsträger 1, der eine inkrementale Teilung 3 aus lichtdurchlässigen Streifen und lichtundurchlässigen Streifen aufweist, die senkrecht zur Meßrichtung X verlaufen. Parallel zur inkrementalen Teilung 3 ist eine Referenzmarkenspur 4 mit mehreren der inkrementalen Teilung 3 fest zugeordneten Referenzmarken in Meßrichtung X vorgesehen, von denen jedoch nur eine Referenzmarke 5 dargestellt ist. Diese Referenzmarke 5 besteht aus einer unregelmäßig angeordneten Gruppe von Feldern 5₁, die ein erstes Phasengitter mit einer ersten Gitterkonstanten aufweisen, deren Gitterstreifen in Meßrichtung X verlaufen. Das Umfeld 6 der einzelnen Felder 5₁ der Referenzmarke 5 in der Referenzmarkenspur 4 besteht aus einem zweiten Phasengitter mit einer zweiten Gitterkonstanten, deren Gitterstreifen ebenfalls in Meßrichtung X verlaufen; die zweite Gitterkonstante ist kleiner als die erste Gitterkonstante.

Zur Abtastung der inkrementalen Teilung 3 enthält die Abtasteinheit 2 eine erste Lichtquelle 7, einen ersten Kondensor 8, eine Abtastteilung 9 auf einer ersten Abtastplatte 10 sowie ein Photoelement 11. Bei der Meßbewegung der Abtasteinheit 2 bezüglich des Teilungsträgers 1 wird das von der ersten Lichtquelle 7 ausgehende und vom ersten Kondensor 8 parallel gerichtete Licht von der Abtastteilung 9 und von der inkrementalen Teilung 3 moduliert und fällt auf das Photoelement 11 zur Erzeugung eines periodischen Abtastsignals, aus dem in bekannter Weise Meßwerte für die Relativlage der beiden Objekte gewonnen werden.

Zur Abtastung der Referenzmarkenspur 4 mit der Referenzmarke 5 weist die Abtasteinheit 2 eine zweite Lichtquelle 12, einen zweiten Kondensor 13, eine Referenzabtastteilung 14 auf einer zweiten Abtastplatte 10₁, eine Abbildungsoptik 15 sowie zwei Referenzphotoelemente 16, 17 und zwei Gegentaktphotoelemente 18, 19 auf einer Photoelementenplatine 20 auf, auf der auch das Photoelement 11 angeordnet ist. Die vier Photoelemente 16-19 sind symmetrisch zur optischen Achse 21 des Referenzabtaststrahlenganges quer zur Meßrichtung X angeordnet.

In Figur 2 sind in einer Draufsicht die beiden Abtastplatten 10, 10₁ mit der Abtastteilung 9 für die inkrementale Teilung 3 und mit der Referenzabtastteilung 14 für die Referenzmarke 5 dargestellt. Die Abtastteilung 9 ist mit der inkrementalen Teilung 3 identisch und weist die gleichen lichtdurchlässigen Streifen und lichtundurchlässigen Streifen auf; die Referenzabtastteilung 14 besitzt die gleiche unregelmäßig angeordnete Gruppe von lichtdurchlässigen Feldern 14₁ wie die Referenzmarke 5, die jedoch kein Phasengitter aufweisen. Die in der Mitte der Referenzmarkenabtastteilung 14 verlaufende Teilungsachse 22 teilt diese in eine erste Teilungshälfte 23 und in eine zweite Teilungshälfte 24. Da diese Teilungsachse 22 mit der Meßrichtung X einen kleinen Winkel α einschließt, weisen die beiden Teilungshälften 23, 24 einen kleinen gegenseitigen Versatz in Meßrichtung X auf.

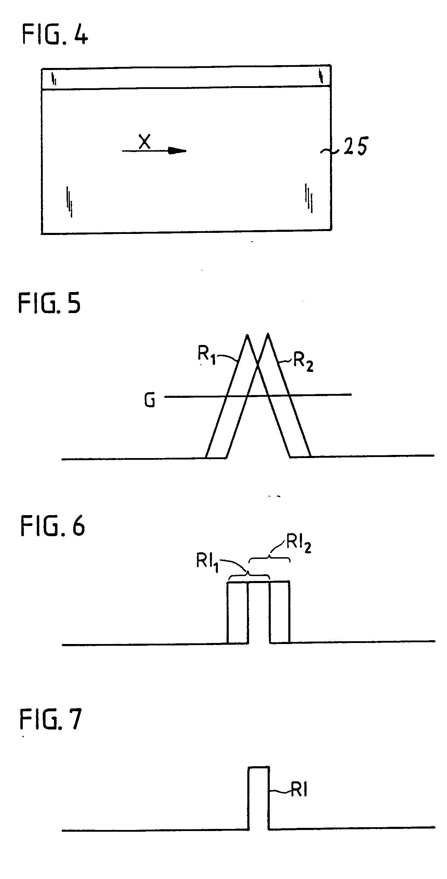

Der Referenzabtaststrahlengang wird durch eine in seiner optischen Achse 21 angeordnete Blende 25 in eine erste Strahlenganghälfte 26, der die erste Teilungshälfte 23 der Referenzabtastteilung 14 sowie das erste Referenzphotoelement 16 und das erste Gegentaktphotoelement 18 zugeordnet sind, und in eine zweite Strahlenganghälfte 27 unterteilt, der die zweite Teilungshälfte 24 der Referenzabtastteilung 14 sowie das zweite Referenzphotoelement 17 und das zweite Gegentaktphotoelement 19 zugeordnet sind. Diese teilweise absorbierende und teilweise reflektierende Blende 25 ist im Querschnitt T-förmig (Figur 1) ausgebildet und erstreckt sich in Meßrichtung X (Figur 4); sie bewirkt eine vollständige optische Trennung der beiden Strahlenganghälften 26, 27.

Bei der Abtastung der Referenzmarke 5 mittels der ersten Teilungshälfte 23 der Referenzabtastteilung 14 beaufschlagen die vom ersten Phasengitter ausgehenden Beugungsstrahlen erster Ordnung das erste Referenzphotoelement 16 zur Erzeugung eines ersten Referenzsignals R₁ ; desgleichen beaufschlagen bei der Abtastung der Referenzmarke 5 mittels der zweiten Teilungshälfte 24 der Referenzabtastteilung 14 die vom ersten Phasengitter ausgehenden Beugungsstrahlen erster Ordnung das zweite Referenzphotoelement 17 zur Erzeugung eines zweiten Referenzsignals R₂. Da die beiden Teilungshälften 23, 24 einen gegenseitigen Versatz in Meßrichtung X aufweisen, sind auch die beiden Referenzsignale R₁, R₂ nach Figur 5 gegeneinander versetzt und überlappen sich somit. Figur 6 zeigt die aus den beiden Referenzsignalen R₁, R₂ durch Triggerung erzeugten zwei Referenzimpulse RI₁ , RI₂ , aus denen durch eine Undverknüpfung ein schmaler resultierender Referenzimpuls RI nach Figur 7 gewonnen wird. Die Triggerung erfolgt mittels des Gegentaktsignals G, das von den beiden Gegentaktphotoelementen 18, 19 erzeugt wird.

Die Referenzmarke kann auch durch ein Amplitudengitter gebildet sein.

Die Erfindung ist bei Längen- oder Winkelmeßeinrichtung sowohl im Auflicht als auch im Durchlicht mit Erfolg einsetzbar.

## Patentansprüche

1. Lichtelektrische Positionsmeßeinrichtung zur Messung der Relativlage zweier Objekte, bei der ein mit dem einen Objekt verbundener Teilungsträger eine Teilung sowie wenigstens eine dieser Teilung zugeordnete Referenzmarke aufweist und bei der eine mit dem anderen Objekt verbundene Abtasteinheit die Teilung zur Erzeugung von Meßwerten und die Referenzmarke mittels einer Referenzabtastteilung und mittels Referenzphotoelemente abtastet, dadurch gekennzeichnet, daß der Referenzabtaststrahlengang durch ein in seiner optischen Achse (21) angeordnetes Blendensystem (25) in eine erste Strahlenganghälfte (26) , der die erste Teilungshälfte (23) der Referenzabtastteilung (14) sowie wenigstens ein erstes Referenzphotoelement (16) zugeordnet sind, und in eine zweite Strahlenganghälfte (27) unterteilt ist, der die zweite Teilungshälfte (24) der Referenzabtastteilung (14) sowie wenigstens ein zweites Referenzphotoelement (17) zugeordnet sind, daß zwischen den beiden Teilungshälften (23, 24) der Referenzabtastteilung (14) ein gegenseitiger Versatz in Meßrichtung X besteht und daß die Referenzphotoelemente (16, 17) zwei sich überlappende Referenzsignale (R₁, R₂) zur Gewinnung eines schmalen resultierenden Referenzimpulses (RI) erzeugen.

2. Meßeinrichtung nach Anspruch 1, dadurch gekennzeichnet, daß die Referenzmarke (5) als Beugungsgitter ausgebildet ist.

3. Meßeinrichtung nach Anspruch 1, dadurch gekennzeichnet**,** daß die Blende (25) im Querschnitt T-förmig ausgebildet und in Meßrichtung X längserstreckt ist.

4. Meßeinrichtung nach Anspruch 3, dadurch gekennzeichnet**,** daß die Blende (25) teilweise lichtabsorbierend und teilweise lichtreflektierend ausgebildet ist.

5. Meßeinrichtung nach Anspruch 1, dadurch gekennzeichnet, daß zur Ausbildung des gegenseitigen Versatzes in Meßrichtung X zwischen den beiden Teilungshälften (23, 24) die Teilungsachse (22) der Referenzabtastteilung (14) mit der Meßrichtung X einen kleinen Winkel α einschließt.

6. Meßeinrichtung nach Anspruch 2, dadurch gekennzeichnet**,** daß die Referenzmarke (5) aus einer Gruppe von Feldern (5₁) mit einem Umfeld (6) besteht und daß die Felder (5₁) und das Umfeld (6) jeweils als Phasengitter oder als Amplitudengitter mit unterschiedlichen Gitterkonstanten ausgebildet sind.

7. Meßeinrichtung nach Anspruch 1, dadurch gekennzeichnet, daß die Referenzphotoelemente (16, 17) quer zur Meßrichtung X angeordnet sind.

8. Meßeinrichtung nach Anspruch 7, dadurch gekennzeichnet, daß den Referenzphotoelementen (16, 17) jeweils ein Gegentaktphotoelement (18, 19) zur Erzeugung eines Gegentaktsignals (G) zugeordnet ist.

## Claims

1. Photoelectric position measuring device for measuring the relative position of two objects, in which a graduation support connected to one object comprises a graduation as well as at least one reference mark associated with this graduation and in which a scanning unit connected to the other object scans the graduation to produce measurement values and the reference mark is scanned by means of a reference scanning graduation and by means of reference photocells, characterised in that the reference scanning beam path is divided by a screen system (25) arranged in its optical axis (21) into a first beam path half (26) with which are associated the first half (23) of the reference scanning graduation (14) as well as at least one first reference photocell (16), and a second beam path half (27) with which are associated the second half (24) of the reference scanning graduation (14) as well as at least one second reference photocell (17), in that between the two halves (23, 24) of the reference scanning graduation (14) there is a mutual shift in the direction of measurement X and in that the reference photocells (16, 17) generate two overlapping reference signals (R₁, R₂) for obtaining a narrow resulting reference pulse (RI).

2. Measuring device according to claim 1, characterised in that the reference mark (5) is constructed as a diffraction grid.

3. Measuring device according to claim 1, characterised in that the screen (25) is T-shaped in cross-section and extends longitudinally in the direction of measurement X.

4. Measuring device according to claim 3, characterised in that the screen (25) is partially light-absorbing and partially light-reflecting.

5. Measuring device according to claim 1, characterised in that to form the mutual shift in the direction of measurement X between the two graduation halves (23, 24), the axis (22) of the reference scanning graduation (14) forms with the direction of measurement X a small angle α.

6. Measuring device according to claim 2, characterised in that the reference mark (5) consists of a group of fields (5₁) with a surrounding field (6) and in that the fields (5₁) and the surrounding field (6) are in each case constructed as phase grids or as amplitude grids with different grid constants.

7. Measuring device according to claim 1, characterised in that the reference photocells (16, 17) are arranged transversely to the direction of measurement X.

8. Measuring device according to claim 7, characterised in that with each reference photocell (16, 17) is associated a push-pull photocell (18, 19) for generating a push-pull signal (G).

## Revendications

1. Dispositif photo-électrique de mesure de position pour la mesure de la position relative de deux objets, dans lequel un support de graduation relié à l'un des objets présente une graduation ainsi qu'une marque de référence associée à cette graduation et dans lequel une unité d'exploration reliée à l'autre objet explore la graduation en vue de la production de valeurs de mesure et la marque de référence au moyen d'une graduation d'exploration de référence et au moyen de photo-éléments de référence, caractérisé par le fait que le trajet de rayon d'exploration de référence est subdivisé par un système d'écran (25) en une première moitié de trajet de rayon (26) à laquelle sont associés la première moitié de graduation (23) de la graduation d'exploration de référence (14) ainsi qu'au moins un premier photo-élément de référence (16), et en une seconde moitié de trajet de rayon (27) à laquelle sont associés la première moitié de graduation (24) de la graduation d'exploration de référence (14) ainsi qu'au moins un second photo-élément de référence (17), qu'un décalage réciproque dans la direction de mesure X existe entre les deux moitiés de graduation (23, 24) de la graduation d'exploration de référence (14) et que les photo-éléments de référence (16, 17) produisent deux signaux de référence (R₁, R₂) se chevauchant, en vue de la production d'une impusion de référence (RI) résultante étroite.

2. Dispositif de mesure suivant la revendication 1, caractérisé par le fait que la marque de référence (5) est réalisée sous la forme d'une grille de diffraction.

3. Dispositif de mesure suivant la revendication 1, caractérisé par le fait que l'écran (25) présente une section en T et s'étend longitudinalement dans la direction de mesure X.

4. Dispositif de mesure suivant la revendication 3, caractérisé par le fait que l'écran (25) est réalisé partiellement de manière à absorber la lumière et partiellement de manière à réfléchir la lumière.

5. Dispositif de mesure suivant la revendication 1, caractérisé par le fait qu'en vue de la formation du décalage réciproque dans la direction de mesure X entre les deux moitiés de graduation (23, 24), l'axe de graduation (22) de la graduation d'exploration de référence (14) fait un petit angle α avec la direction de mesure X.

6. Dispositif de mesure suivant la revendication 2, caractérisé par le fait que la marque de référence (5) se compose d'un groupe de champs (5₁) avec un champ environnant (6) et que les champs (5₁) et le champ environnant (6) sont réalisés sous forme de réseaux de phase ou de réseaux d'amplitude avec des constantes de réseau différentes.

7. Dispositif de mesure suivant la revendication 1, caractérisé par le fait que les photo-éléments de référence (16, 17) sont disposés transversalement à la direction de mesure X.

8. Dispositif de mesure suivant la revendication 7, caractérisé par le fait qu'un photo-élément en opposition (18, 19) est associé à chaque photo-élément de référence (16, 17) en vue de la production d'un signal en opposition (G).
